# EUROPEAN PATENT APPLICATION

(11) **EP 4 742 397 A2**
(43) Date of publication of application: **13.05.2026**
(21) Application number: 26157149.1
(22) Date of filing: 10.11.2023
(51) Int. Cl.: H01M 50/271

(54) **BATTERY PACK**

(30) Priority: 14.11.2022 KR 20220151958
(62) Divisional of application: 23891930.2
(71) Applicant: LG Energy Solution, Ltd., Seoul 07335 (KR)
(72) Inventor: LEE, Gi Hwan, 34122 Daejeon (KR); SHIN, Ju Hwan, 34122 Daejeon (KR); LEE, Jae Hyun, 34122 Daejeon (KR); LEE, Hyoung Suk, 34122 Daejeon (KR)
(74) Representative: Plasseraud IP

(57) **Abstract**

Disclosed herein relates to a battery pack in which battery modules housed, including: a pack case including a the module area where the battery module may be seated; and a top cover coupled to the pack case to cover the top part of each battery module seated in the pack case, wherein the pack case includes: a base plate supporting a lower part of the battery module; and a side wall coupled along a border of the base plate, wherein the base plate is less thick than the top cover.

## Description

### [Technical Field]

The present invention relates to a battery pack, characterized in that it prevents high temperature heat generated by thermal runaway of some of the battery modules housed therein from propagating to other normal battery modules through a base plate corresponding to the bottom of the battery pack.

This application claims the benefit of priority to Korean Patent Application No. 10-2022-0151958, filed on November 14, 2022, the disclosure of which is incorporated herein by reference in its entirety.

### [Background Technology of the Invention]

Securing the safety of lithium secondary batteries is one of the most important issues as there is a risk of explosion and fire due to overheating. The problem is that if these abnormalities are not appropriately coped with in the early stages, the internal temperature of the secondary battery will increase rapidly due to heat generation, and the rapid increase in temperature will cause a thermal runaway phenomenon, which may lead to an explosion of the secondary battery, and it may spread to neighboring secondary batteries, causing great damage to the battery pack.

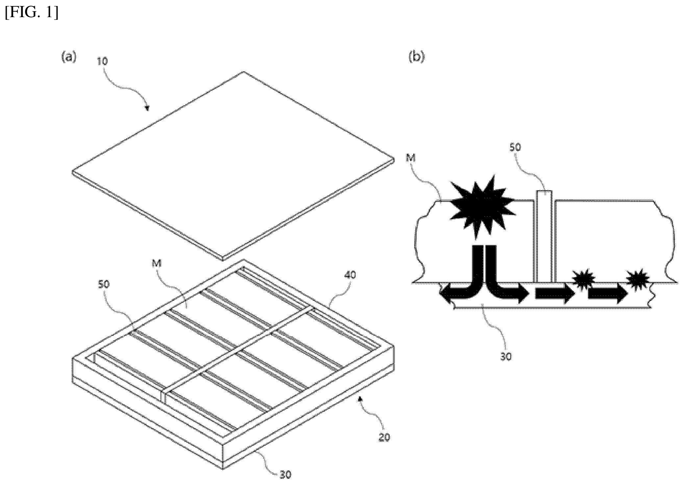

FIG. 1 illustrates a pack case 20 comprising a conventional battery pack, and a top cover 10 that is coupled to the pack case 20. As shown in FIG. 1(a), a plurality of battery modules M is supported by a base plate 30 in the lower part, and the side part is supported by a side wall 40 and a separation wall 50. Thus, each battery module M may be protected in all directions by the base plate 30 supporting the lower part, the top cover 10 covering the top part, and the side wall 40 and separation wall 50 supporting the side part.

Generally, the base plate 30 is prepared to be thick for stability. Specifically, a conventional base plate 30 is made so that it is not deformed even under the pressure of a high temperature gas generated by the thermal runaway of the battery module M. Therefore, the conventional base plate 30 can continuously maintain contact with the thermally runaway battery module M as shown in FIG. 1(b). Conventional battery packs suffer from the fatal problem that such contact can conduct high temperature heat to other normal battery modules M.

### [Prior Art Documents]

Korean Patent Publication No. 10-2170043911

### [Description of the Invention]

### [Technical Problem]

Accordingly, the present invention was conceived to solve the above problems, and aims to provide a battery pack having a structure capable of preventing high temperature heat generated by thermal runaway of some of the battery modules housed therein from propagating to other normal battery modules

Other objects and advantages of the present invention will be understood from the following description, and will become apparent from the embodiments of the present invention. In addition, it will be readily apparent that the objects and advantages of the present invention may be realized by the means and combinations thereof disclosed in the claims of the patent.

### [Technical Solution]

According to the present invention, there is provided a battery pack in which battery modules are housed, including: a pack case including a the module area where the battery module may be seated; and a top cover coupled to the pack case to cover the top part of each battery module seated in the pack case, wherein the pack case includes: a base plate supporting a lower part of the battery module; and a side wall coupled along a border of the base plate, wherein the base plate is less thick than the top cover.

The base plate may be deformed by changes in at least one of pressure and temperature in the module area.

The pack case further includes: a main separation wall traversing the center and coupled to the base plate; and a sub separation wall coupled at both ends to the main separation wall and side wall, respectively, and coupled to the base plate at a predetermined distance spaced along the longitudinal direction of the main separation wall, wherein the module area may be formed in a plurality by compartmentalization of the main separation wall and sub separation wall.

The pack case further includes: a support block protruding from a boundary of the sub separation wall and base plate, wherein the battery module may further include a protrusion part protruding to be supported on the top part of the support block on both sides, and the battery module may be fixed to the pack case by a bolt member penetrating the protrusion part and screwed to the support block.

The pack case further includes: a sub separation wall and a fixing member coupled to a battery module seated adjacent the sub separation wall, wherein the battery module may be fixed to the sub separation wall by screwing together the top end and the end of the fixing member.

The fixing member may span the sub separation wall to be screw-coupled to battery modules located on both sides of the sub separation wall, respectively.

The fixing member may be fixed by being screw-coupled to the top end of the sub separation wall.

Each of the module areas may be sealed by the main separation wall and sub separation wall.

The base plate is formed by the coupling of a plurality of support plates corresponding to each module area, wherein each of the support plates may be deformed by changes in at least one of pressure and temperature of a corresponding module area.

The base plate may include a plurality of protrusions protruding upwardly.

The protrusion may be formed dispersedly on the top part of the base plate in the form of dots, or may be formed extending unidirectionally side by side on the top part of the base plate in the form of lines.

The protrusion in the form of dots may protrude into either a horn or a column shape.

The protrusion in the form of lines may extend in the form of either a straight line or a curved line.

The base plate may have a strength to withstand at least the weight of the battery module.

The base plate may inflate outwardly by the pressure of gases generated in the module area.

### [Advantageous Effects]

According to the present invention, even if high temperature heat and gas are generated due to thermal runaway of some of the battery modules among the plurality of battery modules housed therein, the stability of the battery pack can be improved by preventing the propagation of the heat.

### [Brief Description of the Drawings]

FIG. 1 illustrates a conventional battery pack.
FIG. 2 is a perspective view of a battery pack according to a first embodiment of the present invention.
FIG. 3 illustrates a pack case of the present invention and a plurality of battery modules seated in the pack case.
FIG. 4 is a perspective view of a modified example of a pack case of the present invention.
FIG. 5 is a cross-sectional view of the pack case and top cover of FIG. 4.
FIG. 6 illustrates the coupling of the pack case and top cover of FIG. 5.
FIG. 7 illustrates a thermal runaway of any one battery module among the plurality of battery modules housed in the battery pack of FIG. 6.
FIG. 8 is a perspective view of a pack case included in a battery pack according to a second embodiment of the present invention with a fixing member.
FIG. 9 is a cross-sectional view of the pack case and top cover of FIG. 8.
FIG. 10 illustrates the pack case of FIG. 9 coupled to the top cover.
FIG. 11 illustrates a thermal runaway in some of the battery modules among the plurality of battery modules housed in the battery pack of FIG. 10.
FIG. 12 is a cross-sectional view of a battery pack according to a third embodiment of the present invention.
FIG. 13 illustrates a thermal runaway in some of the battery modules among the plurality of battery modules included in the battery pack of FIG. 12.
FIG. 14 is a perspective view of a pack case included in a battery pack according to a fourth embodiment of the present invention.
FIG. 15 is a cross-sectional view of the coupling of the pack case and top cover of FIG. 14.
FIG. 16 illustrates a thermal runaway that has occurred in some of the battery modules among the plurality of battery modules included in the battery pack of FIG. 15.

### [Best Mode for Carrying out the Invention]

Hereinafter, the preferred embodiments of the present invention will be described in detail with reference to the attached drawings. Prior to this, the terms and words used in this specification and claims should not be construed in a limited or merely dictionary sense, but should be interpreted according to the meaning and concept consistent with the technical spirit of the present invention, based on the principle that the inventor is entitled to define terms in a way that best describes his invention.

Therefore, it should be understood that the embodiments described in this specification and the configurations illustrated in the drawings are merely the most preferred embodiments of the present invention and do not represent all the technical spirit of the present invention, so it should be understood that various equivalents and modifications that could substitute for these embodiments may exist at the time of filing this application.

Furthermore, detailed descriptions of known configurations or functions related to the present invention may be omitted if it is judged that they may obscure the essence of the present invention.

The embodiments of the present invention are provided to illustrate the invention more fully to those of ordinary skill in the art, and the shapes and sizes of the components in the drawings may be exaggerated, omitted, or shown schematically for clarity. Accordingly, the size or proportions of each component are not necessarily indicative of its actual size or proportions.

The present invention relates to a battery pack in which battery modules M are housed, characterized in that it prevents the high temperature heat generated by thermal runaway of some of the housed battery modules M from propagating to other normal battery modules M through a base plate 110 corresponding to the bottom of the battery pack.

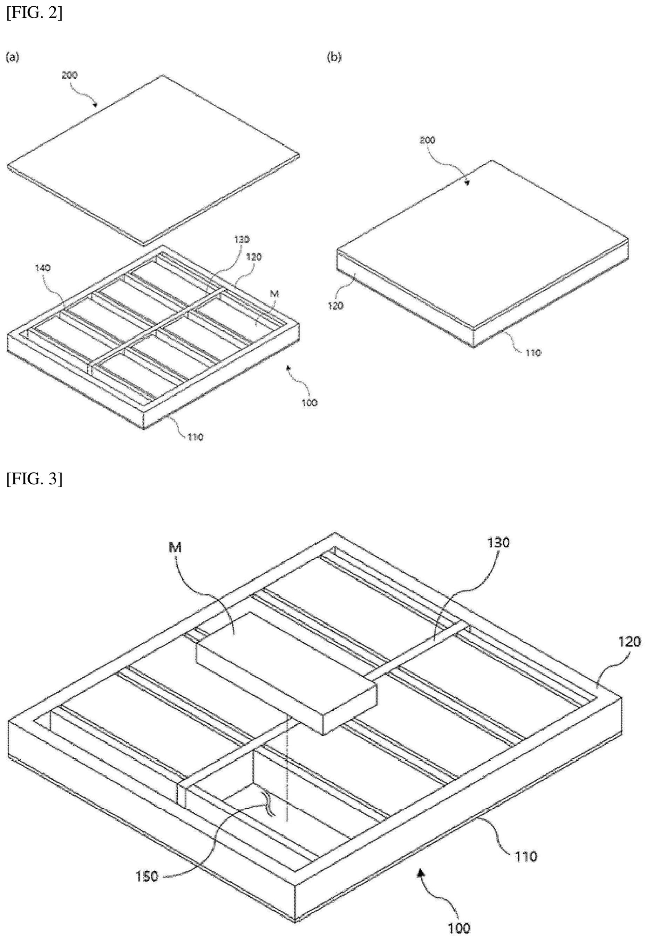

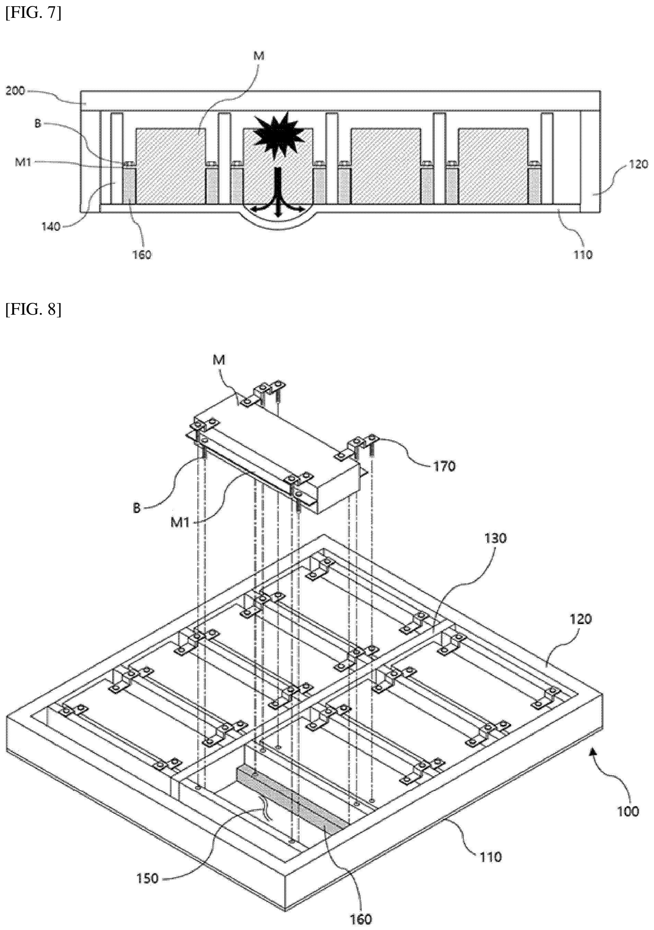

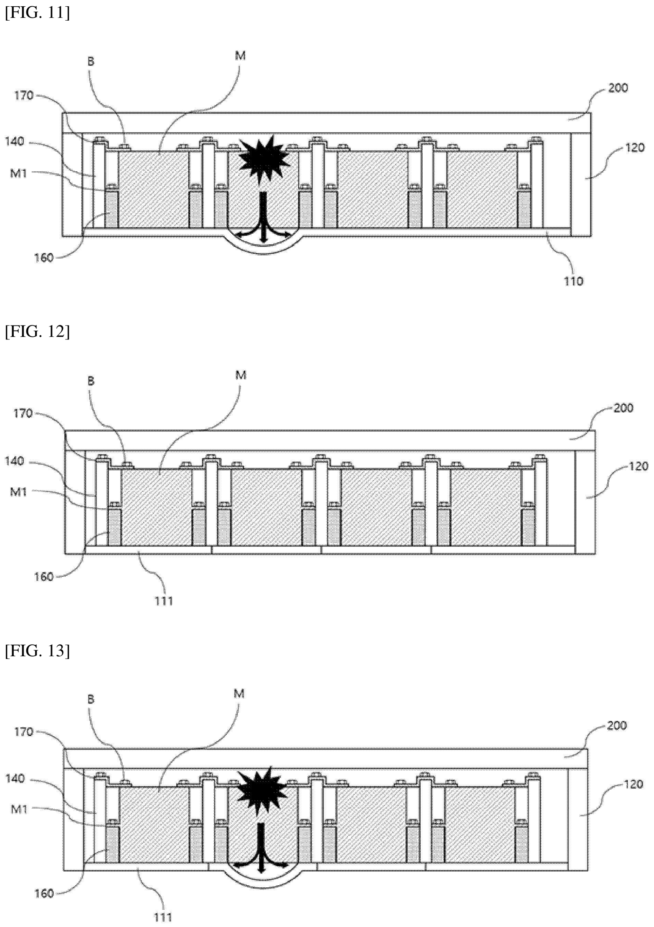

FIGS. 2 through 6 relate to a battery pack according to a first embodiment of the present invention, FIGS. 7 through 10 relate to a battery pack according to a second embodiment of the present invention, FIGS. 11 through 12 relate to a battery pack according to a third embodiment of the present invention, and FIGS. 13 through 15 relate to a battery pack according to a fourth embodiment of the present invention.

Hereinafter, each embodiment of the battery pack of the present invention will be described below with reference to the respective drawings.

### (First embodiment)

FIG. 2 is a perspective view of a battery pack according to a first embodiment of the present invention.

A battery pack of the present invention includes a pack case 100 and a top cover 200, as shown in FIG. 2.

The pack case 100 includes a module area 150 in which the battery modules M may be seated, and supports and protects the side part and lower part of each seated battery module M from the outside.

The pack case 100 includes a base plate 110 that supports a lower part of the battery module M, as shown in FIG. 2(a), and a side wall 120 that is coupled along a border of the base plate 110.

The base plate 110 corresponds to the bottom of the pack case 100 and serves to support and protect the lower part of the seated battery module M.

The side wall 120 serves to support and protect the side part of the plurality of battery modules M seated on the base plate 110 from the outside.

FIG. 3 illustrates a pack case 100 of the present invention and a plurality of battery modules M seated in the pack case 100, and the pack case 100 of the present invention may further include a main separation wall 130 coupled to the base plate 110 across a center as shown in FIGS. 2 and 3, and sub separation wall 140 coupled to the main separation wall 130 and side wall 120 at both ends, respectively, and is spaced at predetermined distance along a longitudinal direction of the main separation wall 130 to be coupled to the base plate 110.

The main separation wall 130 traverses the interior space of the pack case 100 and compartmentalizes the space in which the battery module M is seated largely into two spaces, and the sub separation wall 140 further compartmentalizes the space compartmentalized by the main separation wall 130 into a plurality of spaces.

Inside the main separation wall 130, various wires and busbars used in the battery pack may be inserted or mounted, or alternatively, the inside of the main separation wall 130 may be empty.

The sub separation wall 140 compartmentalizes the plurality of battery modules M located on one side of the main separation wall 130 so that they can be separated from each other.

The module area 150 of the present invention is formed by the compartmentalization of the main separation wall 130 and the sub separation wall 140.

In each module area 150 formed by the compartmentalization of the main separation wall 130 and the sub separation wall 140, a battery module M may be seated one by one. The battery module M housed in the module area 150 may also be fixed to the pack case 100 for a more stable mounting.

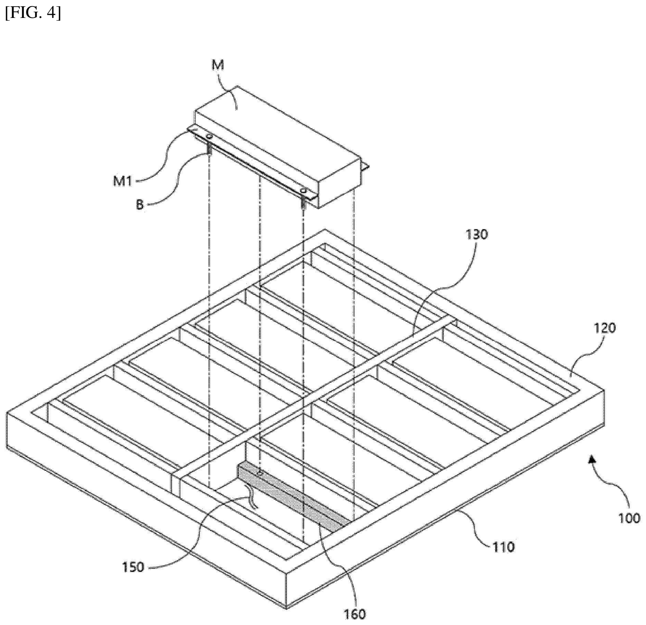

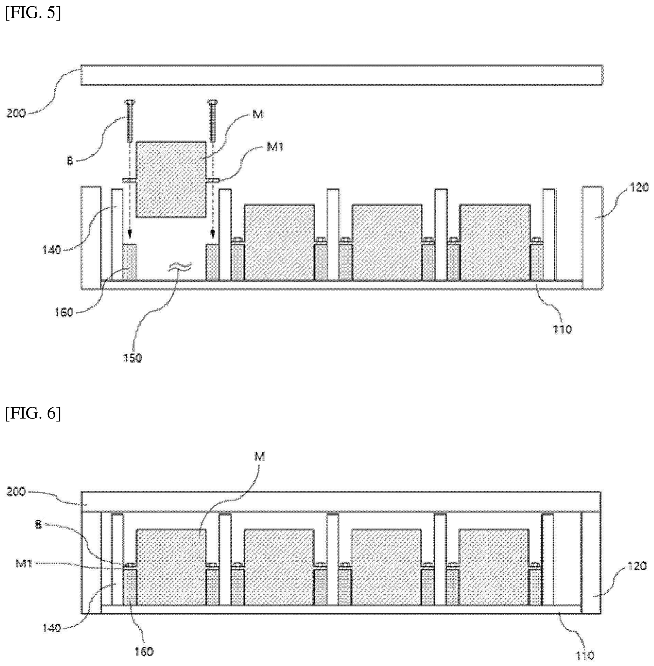

FIG. 4 is a perspective view of a modified example of the pack case 100 of the present invention, FIG. 5 is a cross-sectional view of the pack case 100 and top cover 200 of FIG. 4, and FIG. 6 illustrates a coupling of the pack case 100 and top cover 200 of FIG. 5.

The battery module M used in the battery pack of the present invention may include a protrusion part M1 protruding from both sides as shown in FIGS. 4 and 5. In addition, the pack case 100 in which the battery module M in the above-mentioned form is mounted may further include a support block 160 protruding from the boundaries of the sub separation wall 140 and the base plate 110. Specifically, the battery module M is seated in the module area 150 such that the protrusion part M1 is supported on an upper part of the support block 160, as shown in FIGS. 4 and 5.

A battery module M seated in the module area 150 may be fixed to the pack case 100 by a bolt member B that penetrates the protrusion part M1 and is screwed to the support block 160.

The top cover 200 is coupled to the pack case 100 to cover the top part of each battery module M seated in the pack case 100, as shown in FIG. 2(b). More specifically, the top cover 200 may have its ends abutting the top end of side wall 120 coupled along the border of the base plate 110, and may be screw-coupled to the side wall 120 by a bolt member B and the like so that the interior of the pack case 100 may be sealed.

The battery pack of the present invention may be sealed such that each module area 150 is independent of each other by the coupling of the pack case 100 and the top cover 200, as shown in FIG. 6. More specifically, each module area 150 of the present invention can be sealed by the top cover 200 coupled with the pack case 100 abutting the top end of the main separation wall 130 and the sub separation wall 140 without gaps. Therefore, even if a thermal runaway occurs in the battery modules M included in one module area 150, the high temperature gases caused by the thermal runaway are not directly transferred to the battery modules M in the other module area 150.

Generally, the base plate 110 may be made of aluminum material, which is manufactured with a thick thickness so that it does not deform under high temperature and high pressure. That is, the conventional base plate 110 is manufactured with a thicker thickness than the top cover 200, so that when high temperature and high pressure gas is generated inside the sealed battery pack, the relatively thin top cover 200 swells and deforms under the gas pressure.

The battery pack of the present invention is characterized in that the thickness of the base plate 110 included in the pack case 100 is adjusted to be thinner than the top cover 200. In other words, the battery pack of the present invention is designed so that the base plate 110 is deformed by gas pressure before the top cover 200 when high temperature and high pressure gas is generated inside.

However, the base plate 110 should at least have the strength to withstand the weight of the battery module M.

Preferably, the base plate 110 of the present invention can be deformed by changes in at least one of pressure and temperature in the module area 150.

FIG. 7 illustrates a thermal runaway of any one battery module M among the plurality of battery modules M housed in the battery pack of FIG. 6.

Thermal runaway of the battery module M generates high temperature heat and gas, which fills the sealed module area 150 with gas pressure. Subsequently, the gas pressure pushes out the base plate 110, which is relatively thin in thickness and weak in strength, and deforms the shape of the base plate 110.

Due to the shape deformation of the base plate 110, the contact area between the battery module M and the base plate 110 is reduced, thereby reducing the rate at which the high temperature heat moves through conduction. Therefore, the high temperature heat generated by the battery module M having experienced thermal runaway cannot be easily transferred to other neighboring battery modules M through the base plate 110, thereby preventing the phenomenon of cascading thermal runaway to other battery modules M.

### (Second embodiment)

The battery pack of the present invention may further include a fixing member 170 capable of fixing the battery module M to the sub separation wall 140.

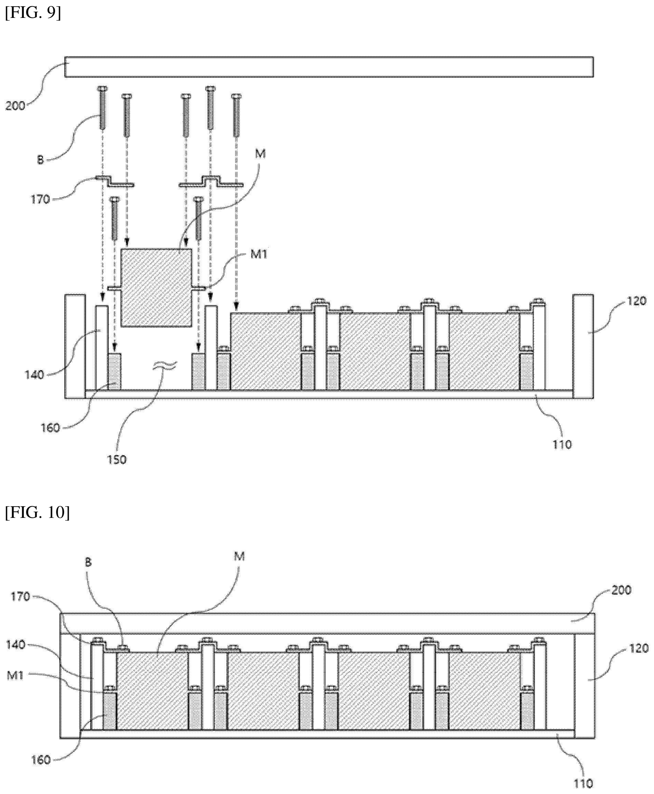

FIG. 8 is a perspective view of a pack case 100 included in a battery pack according to a second embodiment of the present invention with a fixing member 170, FIG. 9 is a cross-sectional view of the pack case 100 and top cover 200 of FIG. 8, and FIG. 10 shows the pack case 100 of FIG. 9 coupled to the top cover 200.

The pack case 100 included in a battery pack according to a second embodiment of the present invention further includes a sub separation wall 140 as shown in FIGS. 8 to 10 and a fixing member 170 that is coupled to a battery module M seated adjacent to the sub separation wall 140. Specifically, a battery module M seated on the pack case 100 is fixed to the sub separation wall 140 by a top end being coupled to an end of the fixing member 170, and further by a bolt member B penetrating through the fixing member 170 and screwed to a top end of the battery module M.

The fixing member 170 may span the sub separation wall 140 as shown and may each be screw-coupled to a battery module M located on both sides of the sub separation wall 140. That is, a pair of neighboring battery modules M interposed with the sub separation wall 140 therebetween may be fixed thereto via one fixing member 170.

Fixing the battery module M to the sub separation wall 140 via the fixing member 170 in this manner is intended to prevent the battery module M from falling down along with the base plate 110 when the base plate 110 inflates outwardly due to thermal runaway of the battery module M. In other words, the fixing member 170 serves to keep the battery module M having experienced thermal runaway fixed to the sub separation wall 140, thereby reducing as much as possible the contact of the battery module M with the base plate 110.

The battery pack of the present invention may have four fixing members 170 fixed to one battery module M as shown, but the number and form of fixing members 170 used need not be limited to those shown, provided that each battery module M can be fixed to the sub separation wall 140.

The fixing member 170 is also preferably screwed to the sub separation wall 140. The fixing member 170 may be fixed by being screw-coupled to the top end of the sub separation wall 140 as shown in FIGS. 8 through 10.

Also not shown, but the fixing member 170 may also be fixed to the sub separation wall 140 by a bolt member B that simultaneously penetrates the top cover 200 and the fixing member 170 and is screwed to the top end of the sub separation wall 140.

FIG. 11 illustrates that thermal runaway has occurred in some of the battery modules M among the plurality of battery modules M housed in the battery pack of FIG. 10.

Referring to FIG. 11, it can be seen that the base plate 110 is deformed by the gas pressure caused by the thermal runaway of the battery module M causing the base plate 110 to fall downward, but that the battery module M is not falling down with the base plate 110 and is being fixed in place by the fixing member 170.

In other words, the more severely the base plate 110 is deformed by the gas pressure, the less contact area there is between the battery module M having experienced thermal runaway and the base plate 110 falling down.

### (Third embodiment)

The base plate 110 included in the battery pack of the present invention may be formed by a coupling of a plurality of support plates 111.

FIG. 12 is a cross-sectional view of a battery pack according to a third embodiment of the present invention.

As shown in FIG. 12, one base plate 110 is formed by the connection of a plurality of support plates 111.

That is, the base plate 110 is formed by the coupling of a plurality of support plates 111 corresponding to each module area 150, and the support plates 111 are deformed by changes in at least one of pressure and temperature of the corresponding module area 150.

Each support plate 111 may be screwed to the lower end of the side wall 120, the main separation wall 130, and the sub separation wall 140, and may be connected and coupled between each support plate 111.

If needed, additional insulating members may be interposed between each support plate 111 to maximally suppress heat transfer between each support plates 111.

FIG. 13 illustrates that thermal runaway has occurred in some of the battery modules M among the plurality of battery modules M included in the battery pack of FIG. 12.

Referring to FIG. 13, only the support plate 111 corresponding to the module area 150 in which the battery module M experiencing thermal runaway is housed is deformed.

### (Fourth embodiment)

The battery pack of the present invention may apply protrusions 112 to the surface of the base plate 110 in order to reduce the contact area of the battery module M and the base plate 110 as much as possible.

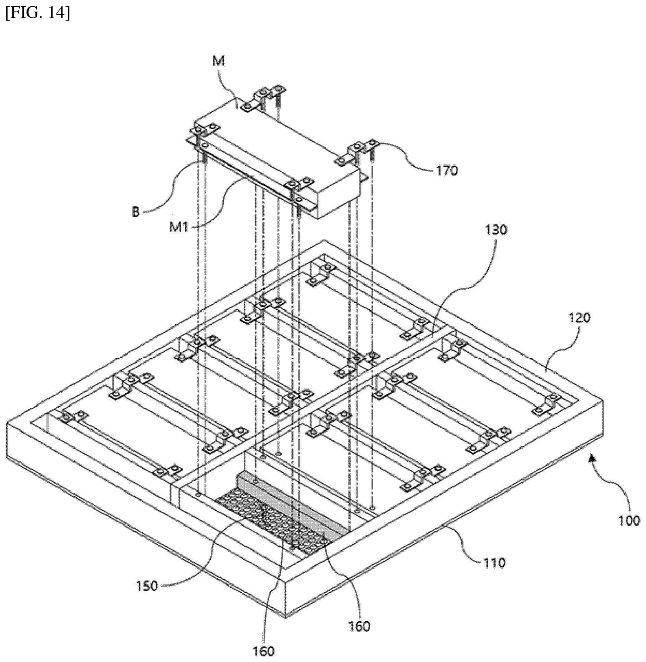

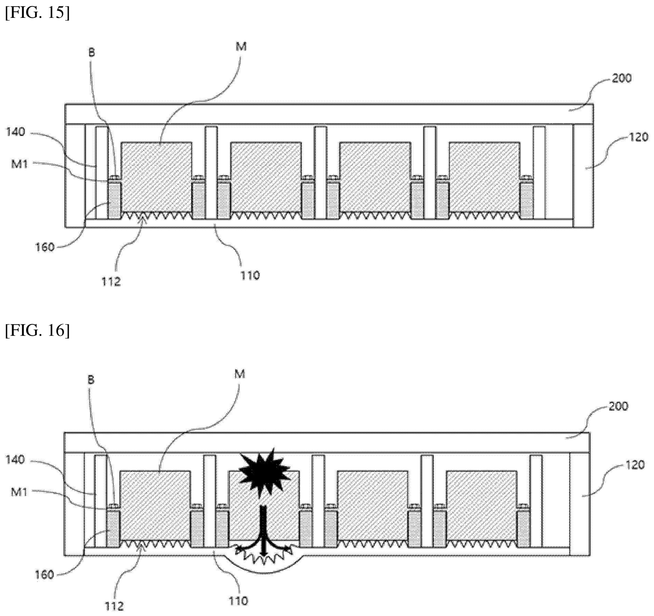

FIG. 14 is a perspective view of a pack case 100 included in a battery pack according to a fourth embodiment of the present invention, and FIG. 15 is a cross-sectional view of the pack case 100 of FIG. 14 coupled to the top cover 200.

The base plate 110 includes a plurality of protrusions 112 protruding upwardly as shown in FIGS. 14 and 15.

The protrusions 112 may be formed dispersed over the top part of the base plate 110 in the form of dots as shown, but are not limited thereto, and may also be formed extending side-by-side in one direction over the top part of the base plate 110 in the form of lines.

The dot-shaped protrusions 112 may protrude into various shapes. For example, the protrusions 112 may protrude into any one of a horn shape and a column shape.

The line-shaped protrusions 112 may extend in any one of a straight line and a curved line.

Thus, the battery module M seated in each module area 150 is supported on the top end of the protrusion 112 so that its entire area cannot be in contact with the base plate 110.

FIG. 16 illustrates that thermal runaway has occurred in some of the battery modules M among the plurality of battery modules M included in the battery pack of FIG. 15.

Referring to FIG. 16, the base plate 110 located at the lower part of the battery module M experiencing thermal runaway is deformed while retaining the protrusions 112, so that the contact point with the battery module M is further reduced. Furthermore, a plurality of normal battery modules M disposed in close proximity may receive only a small amount of heat due to the protrusions 112, even though high temperature heat is transferred through the base plate 110.

The present invention has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may replace them at the time of filing the present application.

### [Reference numerals]

10: (CONVENTIONAL ART) TOP COVER
20: (CONVENTIONAL ART) PACK CASE
30: (CONVENTIONAL ART) BASE PLATE
40: (CONVENTIONAL ART) SIDE WALL
50: (CONVENTIONAL ART) SEPARATION WALL
100: PACK CASE
110: BASE PLATE
111: SUPPORT PLATE
112: PROTRUSION
120: SIDE WALL
130: MAIN SEPARATION WALL
140: SUB SEPARATION WALL
150: MODULE AREA
160: SUPPORT BLOCK
170: FIXING MEMBER
200: TOP COVER
B: BOLT MEMBER
M: BATTERY MODULE
M1: PROTRUSION PART
Preferred embodiments of the Invention are specified in the following items:
Item 1. A battery pack housing a battery module, comprising:
   a pack case including a module area where the battery module may be seated; and
   a top cover coupled to the pack case to cover the top part of each battery module seated in the pack case, wherein
   the pack case comprises:
      a base plate supporting a lower part of the battery module; and
      a side wall coupled along a border of the base plate, wherein
      the base plate is less thick than the top cover.
Item 2. The battery pack of item 1, wherein
   the base plate is deformed by changes in at least one of pressure and temperature in the module area.
Item 3. The battery pack of item 2, wherein
   the pack case further comprises:
   a main separation wall traversing the center and coupled to the base plate; and
   a sub separation wall coupled at both ends to the main separation wall and side wall, respectively, and coupled to the base plate at a predetermined distance spaced along the longitudinal direction of the main separation wall, wherein
   the module area is formed in a plurality by compartmentalization of the main separation wall and sub separation wall.
Item 4. The battery pack of item 3, wherein
   the pack case further comprises:
   a support block protruding from a boundary of the sub separation wall and base plate, wherein
   the battery module further comprises a protrusion part protruding to be supported on the top part of the support block on both sides, and
   the battery module is fixed to the pack case by a bolt member penetrating the protrusion part and screwed to the support block.
Item 5. The battery pack of item 3, wherein
   the pack case further comprises:
   a sub separation wall and a fixing member coupled to a battery module seated adjacent the sub separation wall, wherein
   the battery module is fixed to the sub separation wall by screwing together the top end and the end of the fixing member.
Item 6. The battery pack of item 5, wherein
   the fixing member spans the sub separation wall to be screw-coupled to battery modules located on both sides of the sub separation wall, respectively.
Item 7. The battery pack of item 5, wherein
   the fixing member is fixed by being screw-coupled to the top end of the sub separation wall.
Item 8. The battery pack of item 3, wherein
   each of the module areas is sealed by the main separation wall and sub separation wall.
Item 9. The battery pack of item 3, wherein
   the base plate is formed by the coupling of a plurality of support plates corresponding to each module area, wherein
   each of the support plates is deformed by changes in at least one of pressure and temperature of a corresponding module area.
Item 10. The battery pack of item 1, wherein
   the base plate includes a plurality of protrusions protruding upwardly.
Item 11. The battery pack of item 10, wherein
   the protrusion is formed dispersedly on the top part of the base plate in the form of dots, or are formed extending unidirectionally side by side on the top part of the base plate in the form of lines.
Item 12. The battery pack of item 11, wherein
   the protrusion in the form of dots protrudes into either a horn or a column shape.
Item 13. The battery pack of item 11, wherein
   the protrusion in the form of lines extends in the form of either a straight line or a curved line.
Item 14. The battery pack of item 1, wherein
   the base plate has a strength to withstand at least the weight of the battery module.
Item 15. The battery pack of item 1, wherein
   the base plate inflates outwardly by the pressure of gases generated in the module area.

## Claims

1. A battery pack, comprising:
a battery module (M);
a pack case (100) including a module area (150) where the battery module (M)is seated; and
a top cover (200) coupled to the pack case (100) to cover the top part of each battery module (M) seated in the pack case (100), wherein
the pack case (100) comprises:
a base plate (110) supporting a lower part of the battery module (M); and
a side wall (120) coupled along a border of the base plate (110), wherein
the base plate (110) is less thick than the top cover (200).

2. The battery pack of claim 1, wherein
the base plate (110) is deformed by changes in at least one of pressure and temperature in the module area (150).

3. The battery pack of claim 1, wherein
the pack case (110) further comprises:
a main separation wall (130) traversing the center and coupled to the base plate (110); and
a sub separation wall (140) coupled at both ends to the main separation wall (130) and side wall (120), respectively, and coupled to the base plate (110) at a predetermined distance spaced along the longitudinal direction of the main separation wall (130), wherein
the module area (150) is formed in a plurality by compartmentalization of the main separation wall (130 and sub separation wall (140).

4. The battery pack of claim 3, wherein
the pack case (100) further comprises:
a support block (160) protruding from a boundary of the sub separation wall (140) and base plate (110), wherein
the battery module (M) further comprises a protrusion part (M1) protruding to be supported on the top part of the support block (160) on both sides, and
the battery module (M) is fixed to the pack case (100) by a bolt member penetrating the protrusion part (M1) and screwed to the support block (160).

5. The battery pack of claim 3, wherein
the pack case (100) further comprises:
a sub separation wall (140) and a fixing member (170) coupled to a battery module (M) seated adjacent the sub separation wall (140), wherein
the battery module (M) is fixed to the sub separation wall (140) by screwing together the top end and the end of the fixing member (170).

6. The battery pack of claim 5, wherein
the fixing member (170) spans the sub separation wall (140) to be screw-coupled to battery modules (M) located on both sides of the sub separation wall (140), respectively.

7. The battery pack of claim 5, wherein
the fixing member (170) is fixed by being screw-coupled to the top end of the sub separation wall (140).

8. The battery pack of claim 3, wherein
each of the module areas (150) is sealed by the main separation wall (130) and sub separation wall (140).

9. The battery pack of claim 3, wherein
the base plate (110) is formed by the coupling of a plurality of support plates (111) corresponding to each module area (150), wherein
each of the support plates (111) is deformed by changes in at least one of pressure and temperature of a corresponding module area (150).

10. The battery pack of claim 1, wherein
the base plate includes a plurality of protrusions protruding upwardly.

11. The battery pack of claim 10, wherein
the protrusions (112) are formed dispersedly on the top part of the base plate (110) in the form of dots, or are formed extending unidirectionally side by side on the top part of the base plate (110) in the form of lines.

12. The battery pack of claim 11, wherein
the protrusions (112) in the form of dots protrude into either a horn or a column shape.

13. The battery pack of claim 11, wherein
the protrusions (112) in the form of lines extend in the form of either a straight line or a curved line.

14. The battery pack of claim 1, wherein
the base plate (110) has a strength to withstand at least the weight of the battery module (M).

15. The battery pack of claim 1, wherein
the base plate (110) inflates outwardly by the pressure of gases generated in the module area (150).
